# EUROPEAN PATENT SPECIFICATION

(11) **EP 1 916 140 B1**
(45) Date of publication and mention of the grant of the patent: **03.04.2013**
(21) Application number: 06122945.6
(22) Date of filing: 25.10.2006
(51) Int. Cl.: B60J 10/00, B62D 27/02

(54) **Sealing arrangement and attachment method using such an arrangement**
Dichtungsanordnung und Verbindungsmethode zur Anwendung einer solchen Anordnung
Arrangement d'un joint d'étainchété et procédé de connexion pour l'utilisation d'un tel arrangement

(43) Date of publication of application: 30.04.2008
(73) Proprietor: Volvo Car Corporation, 405 31 Göteborg (SE)
(72) Inventor: Ström, Mats, 441 63 Alingsås (SE); Holmberg, Per, 434 94 Vallda (SE)
(74) Representative: Romare, Laila Anette

(56) References cited:
- GB-A- 2 182 996
- US-A- 4 719 689
- US-B1- 6 368 008

## Description

### TECHNICAL FIELD

This invention relates to a sealing arrangement according to the preamble of claim 1 and to a method according to claim 10, for sealed attachment of a component to a base structure involving the use of a heat expandable sealing member arranged between a contacting part of the component and the base structure. In particular, the invention relates to the attachment of a component, such as a hinge bracket, to a vehicle body in a vehicle manufacturing process. Such a sealing arrangement and method are known from GB 2182996 A.

### BACKGROUND ART

Brackets, especially hinges, mounted to the exterior of a vehicle body ("body-in-white") in the vehicle assembling process have to be sealed-off in order to avoid corrosion, in particular crevice corrosion, which otherwize will jeopardize the long-term function and corrosion warranty. Corrosion attacks on hinge attachments or other components may lead to premature functional loss and even safety related failures. Traditional, thin zinc pre-coating solely is not sufficient for this purpose and there are a number of alternative methods known in the vehicle industry for avoiding corrosion.

In one method, sealing application between the mating surfaces in the vehicle body shop is followed by painting. This results, however, often in that the sealing perimeter will have a border line prone to corrosion, especially if the contacting sheet is uncoated steel, such as tail-gate hinges attached to the vehicle roof.

Another method is to use external sealing applied onto body-in-white or, more common, in the paint shop on the primed surface, either manually or by robot. This operation requires good access and operational skill to achieve a full and closed sealing which is important since crevice corrosion otherwize may be enhanced.

Normally, the component to be mounted onto the vehicle body is in a first step fastened to the sheet, for instance by spot welding. In a second step, the vehicle body is subject to painting, commonly using electro-coating that provides for a good adhesion and paint penetration. Using only paint, and no particular sealant, often results in that moisture accumulates beneath the component which in turn results in corrosion.

Generally, the conventional anti-corrosion measures and methods are associated with considerable investments in equipment and/or costs of manpower. Another general drawback is the poor appearances of the sealing.

### DISCLOSURE OF INVENTION

The object of this invention is to provide a sealing arrangement that exhibit improved anti-corrosion properties and makes the production more effective compared to conventional technique. This object is achieved by the arrangement and method defined in claims 1 and 10. The dependent claims contain advantageous embodiments, further developments and variants of the invention.

The invention concerns a sealing arrangement for sealed attachment of a component to a base structure, said arrangement comprising a heat expandable sealing member arranged between a contacting part of the component and the base structure. In the inventive sealing arrangement, the heat expandable sealing member is positioned in a groove that extends between and along the contacting part of the component and the base structure. Further, the component and the base structure are arranged in relation to each other such that a clearance is formed between the contacting part of the component and the base structure along an, with respect to the component, outwardly directed side of the groove, said clearance being sufficiently large, at least before expansion of the sealing member, to allow a corrosion preventing agent to penetrate through the clearance at least as far as to the sealing member, said clearance further being sufficiently small, at least after expansion of the sealing member, to have a concealing function with regard to the sealing member.

Such a design has several advantageous effects. Firstly, a heat expandable sealing member allows, as such, for a good and closed sealing. This sealing property is further enhanced in the inventive sealing arrangement in that, when a corrosion preventing agent has been applied and the sealing member is activated by heat exposure, the sealing member expands as to overlap the anti-corrosive coating. This way the risk of forming a border line prone to corrosion is eliminated. Secondly, the manufacturing process is simplified since no manual sealing operation is required in the manufacturing plant. Thirdly, the inventive arrangement enables the sealing member to be pre-mounted in the groove which further simplifies the manufacturing process, and which also eliminates structural restrictions with regard to geometrical accessibility for applying sealing material after attachment of the component to the base structure. A fourth advantage is that the sealing member will not be visible which allows for a very good appearance.

In a first advantageous embodiment of the inventive sealing arrangement the groove is arranged around a central portion of the contacting part of the component and that the sealing member forms a closed loop. This suits most components and provides for a reliable sealing. Preferably, the corrosion preventing agent is an electro-coat paint applied in an electro-coat process. Such paint and process are well suited for allowing the paint to penetrate through the clearance and are generally used in e.g. car manufacturing. Since the sealing member can be activated in the same process step as the paint is cured, no additional process step is needed.

In a preferred embodiment, an outer portion of the contacting part of the component protrudes at a side of the expandable sealing member such that said clearance is formed between said outer portion and the base structure.

Preferably, the groove is arranged in the contacting part of the component. Such a design is relatively simple and makes it possible to pre-mount the sealing member in the component which simplifies handling. Preferably, the clearance is ≤ 5 mm, more preferably in the range 0,3 - 2 mm. Generally, a clearance within the latter range allows the corrosion preventing agent to penetrate and is relatively easy to produce with regard to tolerances, and it is also sufficiently small to hide the sealing member after it has been expanded.

In a preferred variant of the invention, the sealing member is arranged such as to, before expansion, provide a second clearance between the sealing member and the contacting part of the component or the base structure. This way the anti-corrosion agent is allowed to penetrate even further which results in that the expanded sealing member will overlap the protective layer even more.

In a preferred application of the inventive sealing arrangement, the component is a bracket and the base structure forms a part of a vehicle body. Preferably, at least one of the component and the base structure is made of a metal.

The invention also concerns a method for sealed attachment of a component to a base structure using a sealing arrangement of the abovementioned type. The inventive method comprises the steps of attaching the component onto the base structure, applying a corrosion preventing agent to the component and base structure, and exposing the heat expandable sealing member to an elevated temperature as to activate the sealing member.

In an advantageous embodiment of this method, the corrosion preventing agent is cured in the same heat exposing step as the sealing member is activated. Thereby, the manufacturing process is simplified in that two effects are achieved in one process step. Preferably, the corrosion preventing agent is an electro-coat paint that is applied in an electro-coating process.

### BRIEF DESCRIPTION OF DRAWINGS

In the description of the invention given below reference is made to the following examplary figures, in which:
- Figure 1: shows, in a perspective view, a first preferred embodiment of a sealing arrangement according to the invention,
- Figure 2: shows the sealing arrangement according to figure 1 in a cross-sectional view along the section A-A,
- Figure 3: shows the cross-sectional according to figure 2 after a further step in a manufacturing process, and
- Figure 4: shows the cross-sectional according to figure 2 and 3 after a still further step in the manufacturing process.

### EMBODIMENT(S) OF THE INVENTION

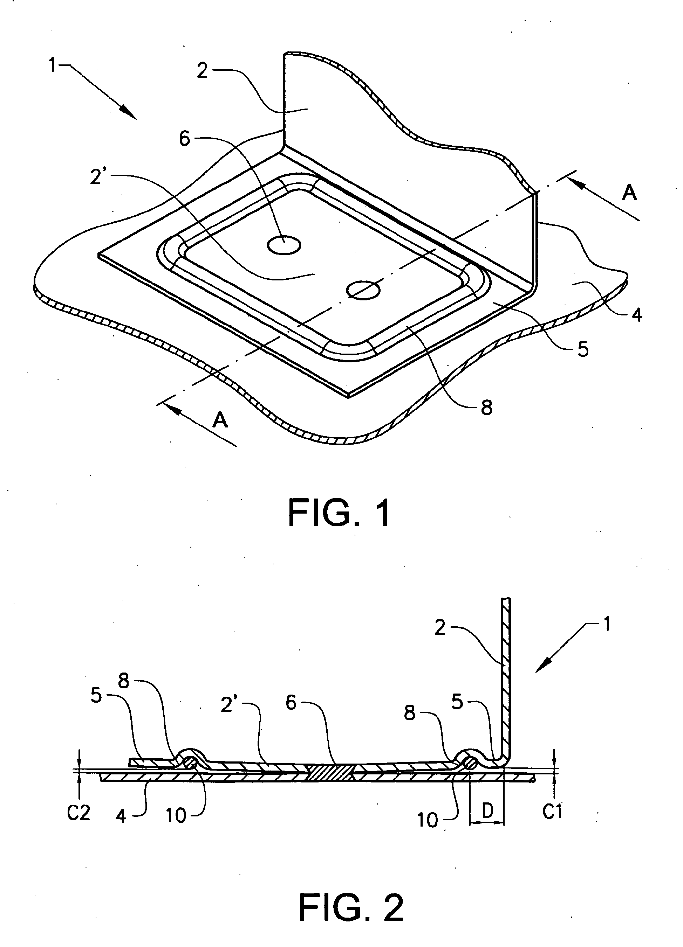

Figure 1 shows an arrangement 1 for sealing attachment of a steel hinge bracket 2 to a steel sheet of a vehicle body 4 according to a preferred embodiment of the invention. The vehicle body 4 is a so-called body-in-white, i.e. the metallic sheets of the body 4 may have been subject to preliminary surface treatment, such as coil-coating with zinc or weldable primers, but no coating layer of paint has yet been applied. The bracket 2 is attached to the body 4 by means of spot welds 6. A stamped groove 8 is arranged just inside the perimeter of an, in this example horizontal, contacting part 2' of the bracket 2, i.e. the part of the bracket 2 positioned adjacent to the body 4.

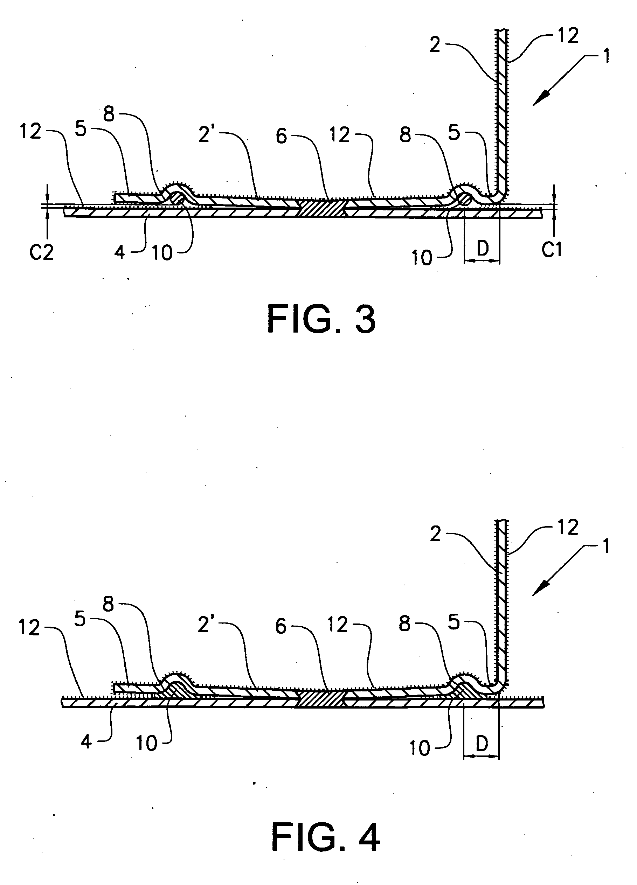

Figure 2 shows the arrangement 1 according to figure 1 in a cross-sectional view along the section A-A. Figures 3 and 4 show the same cross-sectional view as figure 2 but at later process stages.

As can be seen in figure 2, a heat expandable sealing member 10 is positioned in the groove 8 between the bracket 2 and the body 4. The heat expandable sealing member 10 is pre-mounted to the bracket 2 by means of adhesives. The expandable sealing member 10 forms a closed loop around a central portion of the contacting part 2' of the bracket 2 at a distance D from an outer perimeter of the contacting part 2' of the bracket 2. An outer portion of the contacting part 2' forms a flange 5, corresponding to the distance D, protruding at a side of the expandable sealing member 10. The flange 5 is somewhat displaced compared to the central portion of the contacting part 2' in such a way that when the bracket 2 is mounted to the body 4, the flange 5 becomes positioned in relation to the body 4 such as to exhibit a first clearance C1 between the bracket 2 and the body 4. As will be further described below, the clearance C1 is sufficiently large to allow corrosion protective paint to penetrate during a coating process, at least during an electro-coating process, and sufficiently small to conceal the sealing member 10 after its expansion as to provide a premium appearance. Preferably, the clearance C1 is around 0,5-2 mm. Although a clearance of 0,1 mm would be sufficient for allowing paint to pass the clearance C1, 0,3 mm may be regarded as a practical lower limit with regard to tolerances, at least if the bracket 2 is shaped by stamping. The maximum value of the clearance C1 can be increased to 3 mm and perhaps even up to 5 mm in certain applications.

The groove 8 is designed so that the sealing member 10 does not protrude into the central portion of the contacting surface 2' during expansion. This can be regarded as a precautionary measure as to force the sealing member 10 to at least partly expand in an outward direction towards the flange 5 when activated.

The heat expandable sealing member 10 is arranged onto the bracket 2 in such a way as to provide a second clearance C2 between the sealing member 10 and the body 4 in order to allow corrosion protective paint to pass also this clearance C2 during the electro-coating process. A typical cross sectional diameter of the sealing member 10 before expansion is 3 mm, but its shape and size may vary depending on the application.

There exist several types of commercially available materials that expand upon heating, such as expandable polymers and expandable rubber, and which thus are suitable for forming the sealing member 10. By using a material that also exhibit adhesive properties, the sealing member 10 can also be used to attach, or at least to contribute to the attachment of, the bracket 2 to the body 4. The temperature at which the heat expandable sealing member 10 should be activated, i.e. the temperature required for generating an expansion, can in principle be chosen arbitrarily. As a basic preference, this activation temperature is chosen such as to be sufficiently high to avoid activation by mistake and sufficiently low to be reasonably achievable. Preferably, the activation temperature is sufficiently low for being reached in a later process step that anyway is necessary.

In most vehicle manufacturing plants the procedure is the following: After fastening of brackets etc. and after surface pre-treatment, such as degreasing and phospating/passivation, a body-in-white arrives at an electro-coating facility. In an electro-coat tank, the electro-coat paint precipitates on the available surfaces and also penetrates rather well into cavities and crevices. However, if a crevice is too narrow and deep, such as between the spot weld 6 and the sealing member 10 in figure 2, the paint can not penetrate sufficiently to give any contribution to the corrosion protection. In the subsequent process step the precipitated layer of electro-coat is cured in an oven at typically 170-200°C.

Figure 3 shows the arrangement 1 after having been subjected to an electro-coating process. A layer of paint, indicated by the dotted line 12, has now been applied to all accessible surfaces of the body 4 and the bracket 2. Owing to the first clearance C1 it is possible for the paint 12 to provide a coating in-between the bracket 2 and the body 4 over the distance D. Owing to the second clearance C2 an electro-coat 12 can be precipitated also at an inside of the sealing member 10, i.e. towards the central portion of the contacting part 2' of the bracket 2, such that the paint-coat 12 and the sealing member 10 overlaps even before the sealing member 10 is expanded. Thus, the paint is allowed to pass the flange 5 and the groove 8 and then fade into the central portion of the contacting part 2'.

Figure 4 shows the arrangement 1 after having been subjected to a curing process at an elevated temperature. Now the sealing member 10 has expanded towards the body 4, towards the spot weld 6 and towards the flange 5 and has thereby closed the second clearance C2 and partly also the first clearance C1, i.e. the expanded sealing member 10 has completely closed any passageways to the insufficiently coated interior between the body 4 and the bracket 2. Since the corrosion protective paint layer 12 and the expanded sealing member 10 is well overlapping there is no corrosion-prone border-line created. The outer flange 5 acts as a buffer for possible variations in the expansion of the sealing member 10, which thereby becomes sufficiently well concealed for providing a premium appearance.

The major advantages of the invention can be summarized as follows: i) No (manual) sealing operation is required in the (vehicle) manufacturing plant; ii) No limiting design requirements with regard to geometrical accessibility for applying sealing material, iii) Reliable sealing method and structure with regard to full and closed sealing and to variations in process outcome, iv) Allows also for demanding mix-metal combinations, such as attachment of an aluminium component to an iron-containing base structure, since the galvanic corrosion risk is eliminated, and v) No visible sealing - perfect appearance.

Electro-coating of pre-treated (usually by variants of zinc phosphating) vehicle metal body structures and closures is the state-of-the-art priming process for corrosion protection and as a high-finish base for further paint treatments on commercial vehicles. The electro-coating process involves a dip tank through which the vehicle body slowly passes. The vehicle body usually forms the cathode and current distributing anodes are fixed in the tank. Charged paint particles migrate to the cathode in the electrical field and coagulate on the surface, which becomes gradually insulated with the uncured paint film, resulting in coagulation on gradually less accessible surfaces until only tight crevices remains where the electrical field is not capable to reach. Subsequent to the dip tank is a dripping of section followed by an oven where the precipitated coating layer is cured at typically 170-200 degree C for at least 20 minutes.

The invention is not limited by the embodiments described above but can be modified in various ways within the scope of the claims. For instance, the groove 8 can be positioned either in the bracket/component 2 or in the body/base structure 4. In order to enlarge the sealing member accommodation/expansion volume, or to decrease the depth of the groove 8, it is also possible to arrange the groove 8 in both the bracket 2 and the body 4.

Moreover, although the sealing member 10 is preferably pre-mounted in the groove 8 of the bracket 2, it can alternatively be pre-mounted on the body 4.

## Claims

1. Sealing arrangement (1) for sealed attachment of a component (2) to a base structure (4), said arrangement (1) comprising a heat expandable sealing member (10) arranged between a contacting part (2') of the component (2) and the base structure (4), whereby
the heat expandable sealing member (10) is positioned in a groove (8) that extends between and along the contacting part (2') of the component (2) and the base structure (4), **characterized in that** the component (2) and the base structure (4) are arranged in relation to each other such that a clearance (C1) is formed between the contacting part (2') of the component (2) and the base structure (4) along an, with respect to the component (2), outwardly directed side of the groove (8), said clearance (C1) being sufficiently large, at least before expansion of the sealing member (10), to allow a corrosion preventing agent (12) to penetrate through the clearance (C1) at least as far as to the sealing member (10), said clearance (C1) further being sufficiently small, at least after expansion of the sealing member (10), to have a concealing function with regard to the sealing member (10).

2. Arrangement (1) according to claim 1,
**characterized in**
**that** the groove (8) is arranged around a central portion of the contacting part (2') of the component (2) and that the sealing member (10) forms a closed loop.

3. Arrangement (1) according to claim 1 or 2,
**characterized in that** it comprises
the corrosion preventing agent (12) which is an electro-coat paint applicable in an electro-coat process.

4. Arrangement (1) according to anyone of the above claims,
**characterized in**
**that** an outer portion (5) of the contacting part (2') of the component (2) protrudes at a side of the expandable sealing member (10) such that said clearance (C1) is formed between said outer portion (5) and the base structure (4)

5. Arrangement (1) according to anyone of the above claims,
**characterized in**
**that** the groove (8) is arranged in the contacting part (2') of the component (2).

6. Arrangement (1) according to anyone of the above claims,
**characterized in**
**that** the clearance (C1) is ≤ 5 mm, preferably in the range 0,3 - 2 mm.

7. Arrangement (1) according to anyone of the above claims,
**characterized in**
**that** the sealing member (10) is arranged such as to, before expansion, provide a second clearance (C2) between the sealing member (10) and the contacting part (2') of the component (2) or the base structure (4).

8. Arrangement (1) according to anyone of the above claims,
**characterized in**
**that** the component (2) is a bracket and that the base structure (4) forms a part of a vehicle body.

9. Arrangement (1) according to anyone of the above claims,
**characterized in**
**that** at least one of the component (2) and the base structure (4) is made of a metal.

10. Method for sealed attachment of a component (2) to a base structure (4) using a sealing arrangement (1) according to anyone of the above claims,
**characterized in**
**that** it comprises the steps of:
- attaching the component (2) onto the base structure (4),
- applying a corrosion preventing agent (12) to the component (2) and base structure (4), and
- exposing the heat expandable sealing member (10) to an elevated temperature as to activate the sealing member (10).

11. Method according to claim 10,
**characterized in**
**that** the corrosion preventing agent (12) is cured in the same heat exposing step as the sealing member (10) is activated.

12. Method according to claim 10 or 11,
**characterized in**
**that** the corrosion preventing agent (12) is an electro-coat paint that is applied in an electro-coating process.

13. Method according to anyone of claims 10 to 12,
**characterized in**
**that** the component (2) is attached to the base structure (4) by means of spot-welding.

14. Method according to anyone of claims 10 to 13,
**characterized in**
**that** the base structure (4) is a vehicle body.

## Patentansprüche

1. Dichtungsanordnung (1) zur abgedichteten Befestigung einer Komponente (2) an einer Basiskonstruktion (4), wobei die Anordnung (1) ein wärmeexpandierbares Dichtungselement (10) umfasst, welches zwischen einem kontaktierenden Teil (2') der Komponente (2) und der Basiskonstruktion (4) angeordnet ist, wobei das wärmeexpandierbare Dichtungselement (10) in einem Schlitz (8) positioniert ist, welcher sich zwischen und entlang dem kontaktierenden Teil (2') der Komponente (2) und der Basiskonstruktion (4) erstreckt, **dadurch gekennzeichnet, dass** die Komponente (2) und die Basiskonstruktion (4) relativ zueinander derart angeordnet sind, dass ein Zwischenraum (C1) zwischen dem kontaktierenden Teil (2') der Komponente (2) und der Basiskonstruktion (4) entlang einer, in Bezug auf die Komponente (2), nach außen gerichteten Seite des Schlitzes (8) gebildet wird, wobei der Zwischenraum (C1), zumindest vor einer Ausdehnung des Dichtungselements (10), dazu ausreichend groß ist, um ein Korrosionsschutzmittel (12) durch den Zwischenraum (C1) hindurch, zumindest bis hin zum Dichtungselement (10), durchdringen zu lassen, wobei der Zwischenraum (C1), zumindest nach einer Ausdehnung des Dichtungselements (10), ferner dazu ausreichend klein ist, um eine Verbergungsfunktion in Bezug auf die Dichtungselement (10) aufzuweisen.

2. Anordnung (1) nach Anspruch 1, **dadurch gekennzeichnet, dass** der Schlitz (8) um einen zentralen Teil des kontaktierenden Teils (2') der Komponente (2) herum angeordnet ist, und dass das Dichtungselement (10) eine geschlossene Schleife bildet.

3. Anordnung (1) nach Anspruch 1 oder 2, **dadurch gekennzeichnet, dass** sie das Korrosionsschutzmittel (12) umfasst, welches ein Elektrotauchlack ist, welches bei einem Elektrotauchverfahren auftragbar ist.

4. Anordnung (1) nach einem der obigen Ansprüche, **dadurch gekennzeichnet, dass** ein äußerer Teil (5) des kontaktierenden Teils (2') der Komponente (2) an einer Seite des expandierbaren Dichtungselements (10) derart vorspringt, dass der Zwischenraum (C1) zwischen dem äußeren Teil (5) und der Basiskonstruktion (4) gebildet wird.

5. Anordnung (1) nach einem der obigen Ansprüche, **dadurch gekennzeichnet, dass** der Zwischenraum (8) in dem kontaktierenden Teil (2') der Komponente (2) angeordnet ist.

6. Anordnung (1) nach einem der obigen Ansprüche, **dadurch gekennzeichnet, dass** der Zwischenraum (C1) ≤ 5 mm beträgt, vorzugsweise im Bereich von 0,3-2 mm liegt.

7. Anordnung (1) nach einem der obigen Ansprüche, **dadurch gekennzeichnet, dass** das Dichtungselement (10) derart angeordnet ist, um, vor der Ausdehnung, einen zweiten Zwischenraum (C2) zwischen dem Dichtungselement (10) und dem kontaktierenden Teil (2') der Komponente (2) oder der Basiskonstruktion (4) bereitzustellen.

8. Anordnung (1) nach einem der obigen Ansprüche, **dadurch gekennzeichnet, dass** die Komponente (2) ein Beschlag ist, und dass die Basiskonstruktion (4) Teil eines Fahrzeugkörpers bildet.

9. Anordnung (1) nach einem der obigen Ansprüche, **dadurch gekennzeichnet, dass** mindestens eine aus der Komponente (2) und der Basiskonstruktion (4) aus einem Metall hergestellt ist.

10. Verfahren zur abgedichteten Befestigung einer Komponente (2) an einer Basiskonstruktion (4) unter Verwendung einer Dichtungsanordnung (1) nach einem der obigen Ansprüche, **dadurch gekennzeichnet, dass** es die folgenden Schritte umfasst:
- Befestigen der Komponente (2) an der Basiskonstruktion (4),
- Auftragen eines Korrosionsschutzmittels (12) auf die Komponente (2) und die Basiskonstruktion (4), und
- Aussetzen des wärmeexpandierbaren Dichtungselements (10) einer erhöhten Temperatur zur Aktivierung des Dichtungselements (10).

11. Verfahren nach Anspruch 10, **dadurch gekennzeichnet, dass** das Korrosionsschutzmittel (12) während desselben Schrittes des Aussetzens von Wärme wie des für das Dichtungselement (10) aktiviert wird.

12. Verfahren nach Anspruch 10 oder 11, **dadurch gekennzeichnet, dass** das Korrosionsschutzmittel (12) ein Elektrotauchlack ist, welches bei einem Elektrotauchverfahren auftragbar ist.

13. Verfahren nach einem der Ansprüche 10 bis 12, **dadurch gekennzeichnet, dass** die Komponente (2) durch Punktschweißen an der Basiskonstruktion (4) befestigt ist.

14. Verfahren nach einem der Ansprüche 10 bis 13, **dadurch gekennzeichnet, dass** die Basiskonstruktion (4) ein Fahrzeugkörper ist.

## Revendications

1. Dispositif d'étanchéité (1) pour la fixation étanche d'un composant (2) à une structure de base (4), ledit dispositif (1) comprenant un élément d'étanchéité expansible à la chaleur (10) disposé entre une partie de contact (2') du composant (2) et la structure de base (4), l'élément d'étanchéité expansible à la chaleur (10) étant positionné dans une rainure (8) qui s'étend entre et le long de la partie de contact (2') du composant (2) et la structure de base (4),
**caractérisé en ce que**
le composant (2) et la structure de base (4) sont disposés l'un par rapport à l'autre si bien qu'un espace libre (C1) est formé entre la partie de contact (2') du composant (2) et la structure de base (4) le long d'un côté dirigé, en ce qui concerne le composant (2), vers l'extérieur de la rainure (8), ledit espace libre (C1) étant suffisamment grand, au moins avant l'expansion de l'élément d'étanchéité (10), pour permettre à un agent de protection contre la corrosion (12) de pénétrer à travers l'espace libre (C1) au moins aussi loin qu'à l'élément d'étanchéité (10), ledit espace libre (C1) étant en outre suffisamment petit, au moins après l'expansion de l'élément d'étanchéité (10), pour avoir une fonction de dissimulation par rapport à l'élément d'étanchéité (10).

2. Dispositif (1) selon la revendication 1, **caractérisé en ce que** la rainure (8) est disposée autour d'une portion centrale de la partie de contact (2') du composant (2) et **en ce que** l'élément d'étanchéité (10) forme une boucle fermée.

3. Dispositif (1) selon la revendication 1 ou 2, **caractérisé en ce qu'**il comprend l'agent de protection contre la corrosion (12), qui est une peinture électro-revêtement à appliquer dans un procédé électro-revêtement.

4. Dispositif (1) selon l'une quelconque des revendications précédentes, **caractérisé en ce qu'**une portion extérieure (5) de la partie de contact (2') du composant (2) fait saillie à un côté de l'élément d'étanchéité expansible à la chaleur (10) si bien que ledit espace libre (C1) est formé entre ladite portion extérieure (5) et la structure de base (4).

5. Dispositif (1) selon l'une quelconque des revendications précédentes, **caractérisé en ce que** la rainure (8) est disposée dans la partie de contact (2') du composant (2).

6. Dispositif (1) selon l'une quelconque des revendications précédentes, **caractérisé en ce que** l'espace libre (C1) est ≤ 5 mm, préférablement compris entre 0,3 et 2 mm.

7. Dispositif (1) selon l'une quelconque des revendications précédentes, **caractérisé en ce que** l'élément d'étanchéité (10) est agencé de manière à, avant l'expansion, de fournir un deuxième espace libre (C2) entre l'élément d'étanchéité (10) et la partie de contact (2') du composant (2) ou la structure de base (4).

8. Dispositif (1) selon l'une quelconque des revendications précédentes, **caractérisé en ce que** le composant (2) est un support, et **en ce que** la structure de base (4) forme une partie d'une carrosserie de véhicule.

9. Dispositif (1) selon l'une quelconque des revendications précédentes, **caractérisé en ce qu'**au moins l'un des composants (2) et de la structure de base (4) est réalisé en un métal.

10. Procédé pour la fixation étanche d'un composant (2) à une structure de base (4) en utilisant un dispositif d'étanchéité (1) selon l'une quelconque des revendications précédentes, caractérisé en ce qu"il comprend les étapes consistant à:
- attacher le composant (2) sur la structure de base (4),
- appliquer un agent de protection conte la corrosion (12) au composant (2) et à la structure de base (4), et
- exposer l'élément d'étanchéité expansible à la chaleur (10) à une température élevée pour activer l'élément d'étanchéité (10).

11. Procédé selon la revendication 10, **caractérisé en ce que** l'agent de protection contre la corrosion (12) est durcie dans la même étape d'exposition à la chaleur que l'élément d'étanchéité (10) est activé.

12. Dispositif (1) selon la revendication 10 ou 11, **caractérisé en ce que** l'agent de protection contre la corrosion (12) est une peinture électro-revêtement qui est appliquée dans un procédé électro-revêtement.

13. Procédé selon l'une quelconque des revendications 10 à 12, **caractérisé en ce que** le composant (2) est attaché à la structure de base (4) au moyen de soudage par points.

14. Procédé selon l'une quelconque des revendications 10 à 13, **caractérisé en ce que** la structure de base (4) est une carrosserie de véhicule.
